# EUROPÄISCHE PATENTANMELDUNG

(11) **EP 1 661 823 A1**
(43) Veröffentlichungstag der Anmeldung: **31.05.2006**
(21) Anmeldenummer: 05405289.9
(22) Anmeldetag: 12.04.2005
(51) Int. Cl.: B65D 85/76, B65D 21/02, A01J 25/16

(54) **Stapelbarer Behälter zur Lagerung von Käselaiben zwecks Reifung und/oder zum Transport von Käselaiben**

(30) Priorität: 25.11.2004 EP 04405735
(71) Anmelder: Bernhardt Inter Engineering Corp. AG, 4303 Kaiseraugst (CH)
(72) Erfinder: Bernhardt, Ingolf, 4303 Kaiseraugst (CH)
(74) Vertreter: Heinen, Detlef

(57) **Zusammenfassung**

Ein stapelbarer Behälter (1;5) zur Lagerung von Käselaiben (K) zum Zwecke der Aufbewahrung zwecks Reifung und/oder zum Transport von Käselaiben umfasst eine zylindrischen Behälterwand (2;70), einen Behälterboden (3;60,61), eine Einrichtung (4;66) zur Aufnahme eines Transporteurs, beispielsweise zur Aufnahme der Gabel eines Gabelstaplers, sowie eine Einrichtung (42;66) zur Zentierung des Behälters beim Stapeln auf einem anderen solchen Behälter (1;5).

## Beschreibung

Die Erfindung betrifft einen stapelbaren Behälter zur Lagerung von Käselaiben zwecks Reifung und/oder zum Transport von Käselaiben sowie ein Verfahren zur Lagerung und/oder zum Transport von Käselaiben unter Verwendung solcher stapelbaren Behälter, sowie die Verwendung solcher stapelbarer Behälter zwecks Lagerung und/oder Transport.

Das Käsereigewerbe ist ein sehr traditionsreiches und seit vielen Jahren wohletabliertes, aber auch konservatives Gewerbe. Die Käselaibe (von diesem Begriff sind sowohl die Käserohlinge umfasst, welche noch reifen müssen, als auch die ausgereiften Käselaibe) werden häufig nach guter alter Tradition behandelt, um den für die jeweilige Käsesorte typischen Geschmack und die entsprechende Qualität sicherzustellen.

Während die Luftreifung eine sehr lange Tradition hat, entwickelt sich in jüngerer Zeit ein immer stärker werdender Trend zur Folienreifung. In manchen Ländern ist eine Luftreifung gar nicht mehr zulässig, dort darf nur noch eine Folienreifung zur Anwendung kommen. Bei der Folienreifung wird der noch nicht gereifte Käselaib typischerweise in einen Folienschlauch eingebracht, die Folie verschweisst und auf den Käselaib aufgeschrumpft. Anschliessend kann der Käselaib in der Folie reifen, ohne dass eine bakterielle oder anderweitige Verunreinigung des Käses möglich ist. Andere Käsereien setzen dort, wo dies möglich ist, auf die Luftreifung (ohne Folie), weil nach ihrer Meinung der Käse nur bei der Luftreifung seinen einzigartigen Geschmack erhält.

Unabhängig von der Art der Reifung - Luftreifung oder Folienreifung - werden die Käserohlinge in entsprechenden Räumen für einige wenige Wochen gelagert, während denen sie reifen können. In vielen Käsereien erfolgt die Lagerung der Käselaibe zur Reifung in speziellen Hochregalen, zum Teil noch aus Holz, häufig auch aus einem lebensmittelverträglichen Kunststoff oder einem anderen lebensmittelverträglichen Material, wobei in jedem einzelnen Regalfach ein Käselaib separat abgelegt ist. Die Entnahme der Käselaibe aus den Hochregalen erfolgt maschinell mit Hilfe entsprechend ausgebildeter Maschinen.

Nach einigen Wochen der Reifung wird der Käselaib - egal ob luftgereift oder foliengereift - aus dem Regal entnommen und auf einen LKW zum Transport verladen. Zur Entnahme der Käselaibe aus dem Hochregal müssen speziell für diesen Anwendungszweck zugeschnittene Maschinen vorhanden sein, die technisch aufwändig und daher nicht billig sind. Zum Transport werden die Käselaibe häufig auf Paletten oder andere Auflagen gelagert, wobei sich beim Transport das Problem stellt, dass die Käselaibe verrutschen können bzw. vor dem Transport entsprechend gegen Verrutschen gesichert werden müssen. Die Regale müssen - zumindest bei der Luftreifung - anschliessend mit einigem Aufwand gereinigt werden, bevor die nächste Tranche von Käselaiben zur Reifung eingelagert werden kann. Insgesamt ist der Aufwand für Lagerung, Handling und Transport der Käselaibe noch immer sehr aufwändig, bei gleichzeitiger Zunahme des Preisdrucks auf dem Markt.

Hier setzt die vorliegende Erfindung an, deren Aufgabe es ist, den Aufwand bei der Reifung, der Lagerung und beim Transport erheblich zu reduzieren und das Handling zu erleichtern.

Zu diesem Zweck wird erfindungsgemäss ein Verfahren vorgeschlagen, bei welchem zur Lagerung der Käselaibe zwecks Reifung und/oder zu deren Transport ein stapelbarer Behälter eingesetzt wird, wie er durch die Merkmale des Anspruchs 1 charakterisiert ist. Vorteilhafte Weiterbildungen des erfindungsgemässen Verfahrens bzw. des Behälters ergeben sich aus den Merkmalen der abhängigen Patentansprüche.

Insbesondere weist der erfindungsgemässe stapelbare Behälter eine zylindrische (darunter fallen sowohl kreiszylindrische Querschnitte wie auch andere Querschnitte, z.B. quadratische) Behälterwand, einen z.B. einlegbaren Behälterboden, sowie eine Einrichtung zur Aufnahme eines Transporteurs, beispielsweise zur Aufnahme der Gabel eines Gabelstaplers auf. Weiterhin umfasst er eine Einrichtung zur Zentrierung des Behälters beim Stapeln auf einem anderen solchen Behälter.

Unabhängig vom Reifungsverfahren (Folienreifung oder Luftreifung) können in einem solchen Behälter mehrere Käselaibe übereinander angeordnet gelagert werden, ausserdem können mehrere Behälter auf einfache Weise übereinander gestapelt werden. Die Käselaibe können im Behälter nicht in grösserem Masse verrutschen, weil die Behältergrösse so gewählt werden kann, dass sie nur geringfügig grösser ist als der entsprechende zu lagernde Käselaib. Der Behälter eignet sich gleichsam zur Lagerung von Käselaiben zum Zwecke der Reifung wie auch zum Transport von ausgereiften Käselaiben.

Die zylindrische Behälterwand ist in Grösse und Form auf die jeweils einzulagernden Käselaibe zugeschnitten, also geringfügig grösser als die einzulagernden Käselaibe. Der Behälterboden kann entweder gelocht oder ungelocht sein. Insbesondere bei der Luftreifung können gelochte Behälterböden verwendet werden, um die Bildung von Feuchtigkeit zu verhindern (Gefahr der Schimmelbildung) bzw. diese durch die "Belüftung" sofort abzuführen. Bei der Folienreifung ist dies weniger relevant, weil der Käselaib vollständig in der Folie eingeschlossen ist.

Mit Hilfe der Einrichtung zur Aufnahme eines Transporteurs, beispielsweise der Gabel eines Gabelstaplers, kann das Übereinanderstapeln der Behälter mit einem gewöhnlichen Gabelstapler erfolgen. Dadurch wird das Handling stark vereinfacht, indem nämlich zum Zwecke der Lagerung der Käselaibe (z.B. zur Reifung) Behälter mit eingelagerten Käselaiben einfach übereinander gestapelt werden können. Separate Regale, in deren Fächer die Käselaibe eingebracht werden und am Ende des Reifungsprozesses wieder entnommen werden müssen, sind dadurch obsolet. Die Einrichtung zur Zentrierung ist insofern von Vorteil, als mehrere Behälter dieser Art platzsparend und sicher übereinander gestapelt werden können. Das Handling wird weiterhin dadurch erleichtert, dass nach erfolgter Reifung der Käselaibe die Käselaibe nicht mehr aus dem Behälter entnommen werden und zum Transport z.B. auf Paletten umgeladen werden müssen, die dann ihrerseits auf einen LKW verladen werden. Vielmehr kann ein Behälter, der mit mehreren ausgereiften Käselaiben gefüllt ist, als Ganzes von einem Gabelstapler vom oberen Ende eines Behälterstapels abgenommen werden und direkt auf den LKW verladen werden. Die Käselaibe verbleiben in dem Behälter, in welchem auch die Reifung erfolgte.

Auch eine Sicherung gegen Verrutschen der Käselaibe braucht im LKW nicht mehr vorgesehen zu werden, da die Käselaibe im Behälter allenfalls geringfügig innerhalb des Behälters verrutschen können, jedenfalls gegen ein Umherfallen im LKW und im Behälter gesichert sind, sodass im LKW nur noch die Behälter zu sichern sind.

Bei einem vorteilhaften Ausführungsbeispiel des erfindungsgemässen Behälters ist dieser aus einem lebensmittelverträglichen Material hergestellt (z.B. aus einbrennlackiertem, verzinktem Stahl oder aus Edelstahl). Das ist dann besonders wichtig, wenn eine Luftreifung der Käselaibe in dem Behälter erfolgen soll und der Käse eventuell mit dem Behälter in Berührung kommen kann. Ausserdem wird in Lebensmittelverordnungen vieler Länder ein solches Material für alle Behältnisse und sonstige Dinge, die im Umgang mit dem Lebensmittel zum Einsatz kommen und möglicherweise mit dem Lebensmittel in Berührung kommen könnten, ohnehin zwingend vorgeschrieben (z.B. in der EU). Diese Verordnungen gelten unabhängig davon, ob eine Luftreifung oder eine Folienreifung erfolgt.

Bei einem bevorzugten Ausführungsbeispiel des erfindungsgemässen Behälters umfasst der Behälter ein Bodenteil mit einem Auflagerand. Ferner umfasst der Behälter ein zylindrisch ausgebildetes glockenartiges Oberteil, welches die Behälterwand umfasst. Das glockenartige Oberteil ist an seinem oberen Ende geschlossen und an seinem unteren Ende offen. An seinem unteren Ende weist es einen nach aussen hin abstehenden Auflagerand auf, sodass beim Aufschieben des glockenartigen Oberteils das Oberteil zunächst die Käselaibe umgreift, und beim Aufsetzen dann der Auflagerand des glockenartigen Oberteils auf dem Auflagerand des Bodenteils zur Auflage kommt. Somit können die Käselaibe auf einfache Weise in den Behälter eingelagert werden, indem zunächst die Käselaibe auf dem Bodenteil übereinander gestapelt werden, danach kann das glockenförmige Oberteil quasi glockenartig aufgesetzt werden, und schliesslich wird der Behälter geschlossen. In umgekehrter Weise erfolgt die Entnahme: Das Oberteil wird nach oben hin zunächst glockenartig abgehoben und dann können die übereinander Käselaibe in konventioneller Weise - also beispielsweise mittels einer Vakuumsaugglocke nacheinander von oben her abgehoben werden, damit eine Beschädigung der Käselaibe vermieden werden kann. Zwischen den einzelnen Käselaiben können beim Einlagern ebene Platten eingelegt werden (beispielsweise aus Holz oder Kunststoff oder einem anderen geeigneten Material), damit die Oberflächen des Käselaibs bei der Reifung eben bleiben. Ansonsten könnte sich durch die Gasentwicklung im Innern des Käselaibs bei der Reifung leicht eine Bombierung des Käselaibs bzw. der Käselaibe ausbilden, die dann später beim automatischen ebenen Beschneiden des Käselaibs zu mehr "Verschnitt" führt, der dann typischerweise zu Reibkäse verarbeitet wird. Bei einer ebenen Oberfläche des Käselaibs fällt sehr wenig solcher "Verschnitt" an, was die Effizienz weiter erhöht, da für den regulären Käse ein deutlich höherer Preis erzielt wird als für Reibkäse.

Bei einer vorteilhaften Weiterbildung des erfindungsgemässen Behälters ist die Einrichtung zur Zentrierung so ausgebildet, dass das Oberteil des Behälters auf seiner Deckelfläche (z.B. im Bereich des Deckelrandes) mehrere nach oben von Deckelfläche abstehende Aufnahmeelemente aufweist und das Bodenteil des Behälters mit entsprechenden Zentrierfüssen versehen ist, die von der Unterseite des Bodenteils nach unten weg abstehen. Die Aufnahmeelemente und die Zentrierfüsse sind jeweils so angeordnet sind, dass beim Stapeln eines solchen Behälters auf einem anderen solchen Behälter die Zentrierfüsse des oberen Behälters in die Aufnahmeelemente des unteren Behälters eingreifen.

Bei einer weiteren vorteilhaften Weiterbildung des erfindungsgemässen Behälters sind am Oberteil und am Bodenteil des Behälters jeweils Arretierungsmittel vorgesehen, die zusammen einen Schnellverschluss bilden, um das Oberteil und das Bodenteil nach dem Aufsetzen des Oberteils fest verbinden zu können. Mit Hilfe dieser Arretierungsmittel können Oberteil und Bodenteil nach dem Befüllen des Behälters und dem Aufsetzen des Oberteils einfach und schnell miteinander verbunden werden und später zum Entladen des Behälters in umgekehrter Weise wieder voneinander gelöst werden.

Bei einer weiteren vorteilhaften Weiterbildung des erfindungsgemässen Behälters sind am Oberteil des Behälters auf seiner Deckelfläche (z.B. im Bereich des Deckelrandes) Ösen vorgesehen, mit deren Hilfe das Oberteil des Behälters vom Bodenteil abgehoben bzw. auf das Bodenteil aufgesetzt werden kann.

Bei einem weiteren Ausführungsbeispiel des erfindungsgemässen Behälters ist der Behälterboden gelocht und/oder die Behälterwand ist mit regelmässig geometrisch angeordneten Löchern versehen zum Durchstecken von Stäben. Wird nun die Platte eben auf die Käseoberfläche aufgelegt und durch Stäbe, die durch die Löcher in der Behälterwand gesteckt werden, in dieser Lage auf dem Käselaib niedergehalten, so kann bei der Entwicklung eines Gasdrucks im Käselaib keine geneigte Oberfläche des Käselaibs entstehen.

Wie bereits erwähnt, kann zur Lagerung von Käselaiben, z.B. zum Zwecke der Reifung, sowie zum Transport ein und derselbe Behälter zum Einsatz kommen, wobei sich mehrere dieser Behälter auf einfache Weise übereinander stapeln lassen. Dabei können die Käselaibe folienverpackt sein (Folienreifung) oder nicht.

Weitere vorteilhafte Aspekte der Erfindung ergeben sich aus der nachfolgenden Beschreibung eines Ausführungsbeispiels des erfindungsgemässen Behälters mit Hilfe der Zeichnung. Es zeigen:
- Fig. 1: eine schematische Ansicht eines Ausführungsbeispiels des erfindungsgemässen stapelbaren Behälters
- Fig. 2: eine Ansicht des Ausführungsbeispiels des erfindungsgemässen stapelbaren Behälters aus Fig. 1, um 90° um die Längsachse gedreht,
- Fig. 3: eine Ansicht des Behälters aus Fig. 1 von oben,
- Fig. 4: die Einzelheit IV aus Fig. 2 in vergrösserter Darstellung
- Fig. 5: die Einzelheit V aus Fig. 2 in vergrösserter Darstellung,
- Fig. 6: eine schematische Darstellung eines weiteren Ausführungsbeispiels des erfindunsgemässen stapelbaren Behälters im Zusammenbau,
- Fig. 7: einen Ausschnitt des zweiten Ausführungsbeispiels des erfindungsgemässen Behälters in dem Bereich, wo das Oberteil auf dem Bodenteil des Behälters aufliegt,
- Fig. 8: eine schematische Aufsicht von oben auf das zweite Ausführungsbeispiel des erfindungsgemässen Behälters, mit angedeuteten Füssen eines darauf gestapelten weiteren solchen Behälters,
- Fig. 9: den Ausschnitt IX (Schnellverschluss) aus Fig. 6 vergrössert,
- Fig. 10: eine Aufsicht von oben auf den Schnellverschluss aus Fig. 9
und
- Fig. 11: den Ausschnitt XI (Deckelausschnitt mit Ringschraube als Öse) vergrössert.

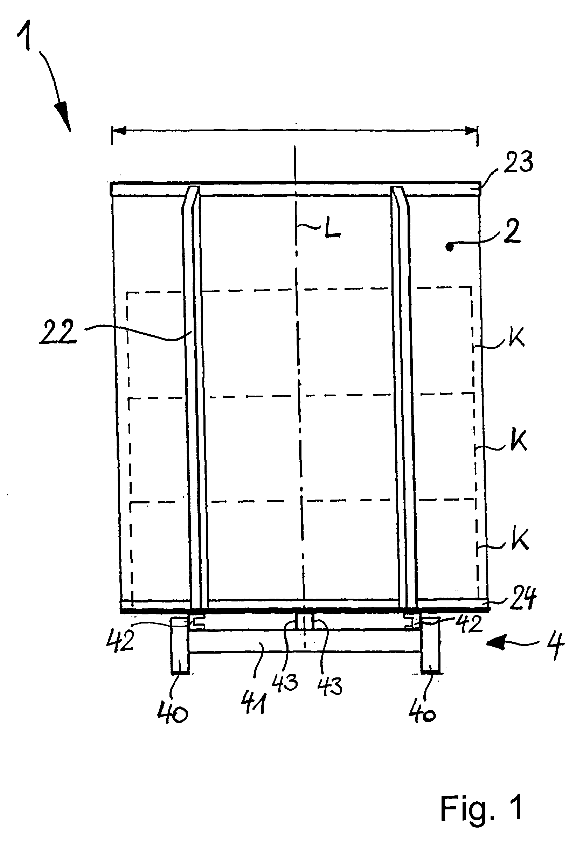

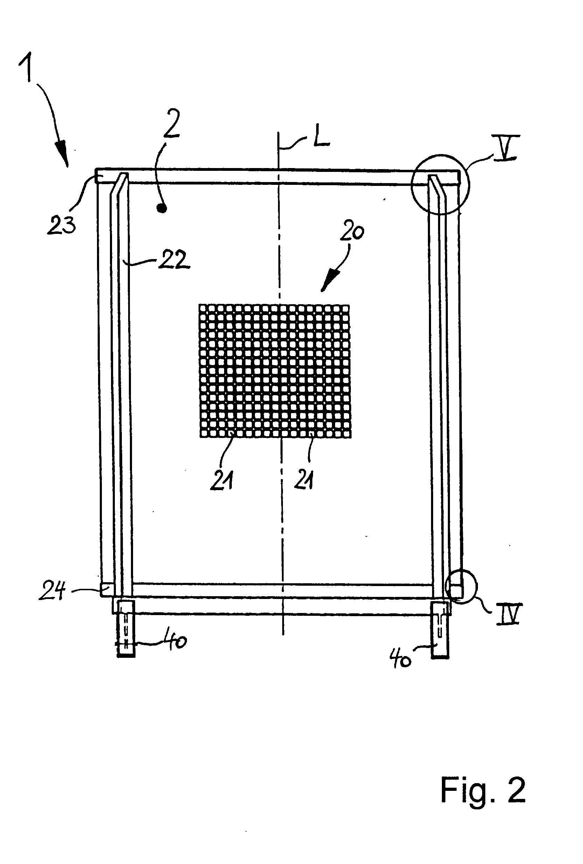

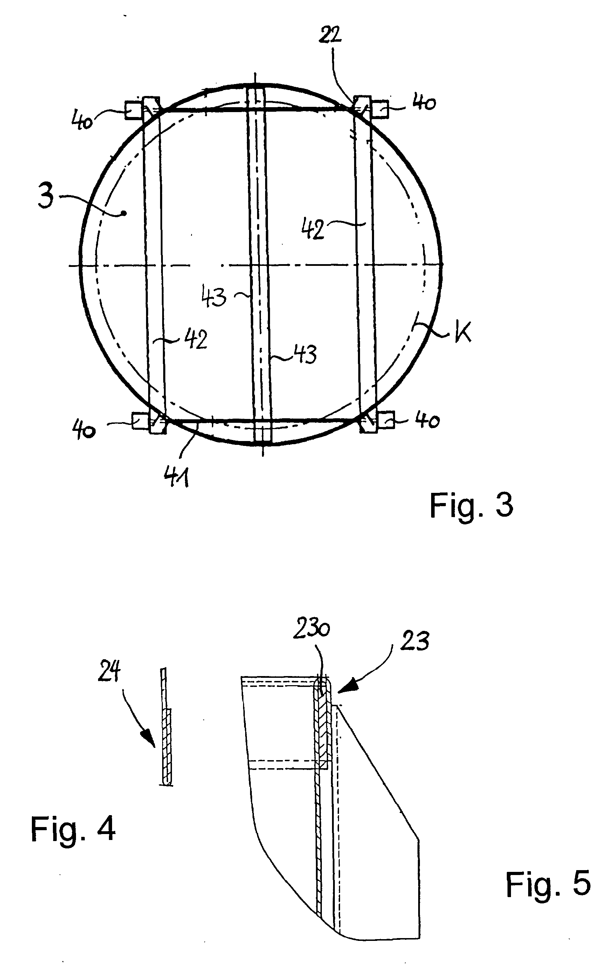

In **Fig. 1, Fig. 2 und Fig. 3** erkennt man ein Ausführungsbeispiel des erfindungsgemässen stapelbaren Behälters 1, wobei die Darstellungen gemäss Fig. 1 und Fig. 2 Seitenansichten zeigen, während Fig. 3 eine Ansicht des Behälters von oben zeigt.

Der Behälter 1 weist bei dem hier gezeigten Ausführungsbeispiel eine kreiszylindrische Behälterwand 2 auf, die - wie man in Fig. 2 in einem Ausschnitt 20 erkennen kann - mit regelmässig geometrisch angeordneten Löchern 21 versehen ist. Auf die besondere Funktion dieser Löcher 21 in der Behälterwand 2 wird weiter unten noch eingegangen. An ihrem oberen Ende ist ein oberer Behälterrand 23 ausgebildet und am unteren Ende ein unterer Behälterrand 24, auf deren Ausgestaltung im einzelnen noch anhand von Fig. 4 und Fig. 5 eingegangen wird.

Am oberen Ende ist der Behälter 1 offen, während er am unteren Ende durch einen vorzugsweise gelochten Behälterboden 3 (siehe Fig. 3) abgeschlossen ist. Die Lochung des Behälterbodens 3 ist in Fig. 3 jedoch aus zeichnerischen Gründen nicht dargestellt. Der Behälterboden 3 kann durch einen stabilen, gelochten Kunststoff-Einlegeboden gebildet sein, welcher von oben her in den Behälterinnenraum eingebracht werden kann und auf U-Profil-Streben am unteren Behälterende aufliegt (wird noch erläutert). Im Innenraum des Behälters 1 können mehrere Käselaibe K übereinander abgelegt sein, was in Fig. 1 durch gestrichelte Linien angedeutet ist, wobei der unterste Käselaib K auf dem Behälterboden 3 aufliegt.

Zwischen den Käselaiben K kann optional (in den Figuren nicht dargestellt) jeweils eine Platte angeordnet werden. Die Platte wird dann jeweils eben auf die Oberfläche des jeweiligen Käselaibs K aufgelegt und kann durch Stäbe, die durch die Löcher 21 in der Behälterwand 2 durchgesteckt werden, eben auf der Oberfläche des jeweiligen Käselaibs K niedergehalten werden, damit sich die Oberfläche des Käselaibs K z.B. bei der Reifung aufgrund des sich im Innern des Käselaibs K entwickelnden Gasdrucks nicht unregelmässig verformen kann. Der sich bei der Reifung im Käselaib K entwickelnde Gasdruck ist ohne weiteres ausreichend gross, um zu verhindern, dass der jeweils untere Käselaib K bzw. die unteren Käselaibe K von dem bzw. von den oberen Käselaiben K unerwünscht zusammengedrückt werden.

Das hier erläuterte Ausführungsbeispiel des Behälters 1 weist vier in Längsrichtung auf der Behälterwand 2 angeordnete Wandstreben 22 auf, die einerseits zur Versteifung der Behälterwand 2 dienen, andererseits mit einer noch zu erläuternden Einrichtung 4 zur Aussenzentrierung des Behälters 1 zusammenwirken, damit beim Stapeln solcher Behälter 1 die Behälter zentriert und sicher aufeinander stehen.

Die Einrichtung 4 zur Aussenzentrierung umfasst bei dem gezeigten Ausführungsbeispiel vier sich in Richtung der Längsachse L des Behälters 1 erstreckende Zentrierfüsse 40. Die Zentrierfüsse 40 (die hier als U-Profil-Stücke ausgebildet sind) sind über zwei Flachprofilträger 41 und zwei U-Profil-Träger 42 derart miteinander verbunden, dass sie an den Ecken eines Rechtecks angeordnet sind. Beim Stapeln von solchen Behältern 1 übereinander erstrecken sich die Zentrierfüsse 40 des jeweils oberen (aufgesetzten) Behälters ein Stück weit entlang der Aussenseite der Behälterwand 2 des unteren Behälters und grenzen von aussen her an die dort vorgesehenen Wandstreben 22 an. Ein derartiger Behälter kann beim Stapeln nur derart auf einen anderen solchen Behälter sicher aufgesetzt werden, dass er zentriert ist. Ein Verdrehen der übereinander gestapelten Behälter gegeneinander ist dann praktisch nicht möglich.

Die beiden U-Profil-Träger 42 sind mit dem unteren Behälterrand 24 verschweisst. Sie sind so angeordnet, dass die Schenkel des U-Profils aufeinander zu weisen, also die Öffnungen der beiden U-Profile aufeinander zu zeigen. Diese U-Profil-Träger 42 haben noch eine weitere Funktion ausser der Verbindung der Zentrierfüsse 40: Sie bilden eine Einrichtung zur Aufnahme der Gabel eines Gabelstaplers, damit die Behälter mit Hilfe eines Gabelstaplers auf einfache Weise transportiert und aufeinander gestapelt werden können.

Schliesslich sind mittig noch zwei Flachprofilstreben 43 vorgesehen, welche sich parallel zu den U-Profil-Trägern 42 erstrecken und an diesen verschweisst sind. Diese Flachprofilstreben 43 dienen zur Versteifung der "Unterbodenkonstruktion" und stabilisieren den Behälterboden.

Da die Behälter 1 beim Stapeln von Behältern aufeinander oder beim Abnehmen eines Behälters von einem Stapel insbesondere im Bereich des oberen Behälterrands 23 und des unteren Behälterrands 24 erheblichen Belastungen ausgesetzt sind, sind sowohl der obere Behälterrand 23 als auch der untere Behälterrand verstärkt.

Aus Fig. 4 ist dabei insbesondere ersichtlich, dass die Verstärkung des unteren Behälterrands 24 als Wandverdopplung ausgebildet ist, die durch Umbiegen des unteren Endes der Behälterwand nach oben gebildet wird.

In Fig. 5 erkennt man, dass die Verstärkung des oberen Behälterrands 23 durch einen Verstärkungsstreifen 230 gebildet wird, wobei die Behälterwand an ihrem oberen Ende so nach unten umgebogen ist, dass der Verstärkungsstreifen 230 zwischen dem nach unten umgebogenen oberen Ende der Behälterwand und der Behälterwand eingeklemmt ist.

Die Behälter 1 können bereits zur Lagerung zum Zwecke der Reifung mit Käselaiben K befüllt und übereinander gestapelt werden. Ist die Reifung abgeschlossen, brauchen die Käselaibe nicht mit Hilfe von aufwändigen Maschinen entnommen und auf Paletten verladen zu werden, sondern ein Behälter kann einfach mit Hilfe eines konventionellen Gabelstaplers vom oberen Ende des Stapels abgenommen werden. Die ausgereiften Käselaibe verbleiben im Behälter. Der Behälter wird mitsamt der Käselaibe auf den LKW verladen, wobei auch im LKW wieder die Behälter übereinander gestapelt werden können, und dann lediglich die Behälter zu sichern sind. Die Käselaibe sind innerhalb ihres Behälters gegen Verrutschen gesichert.

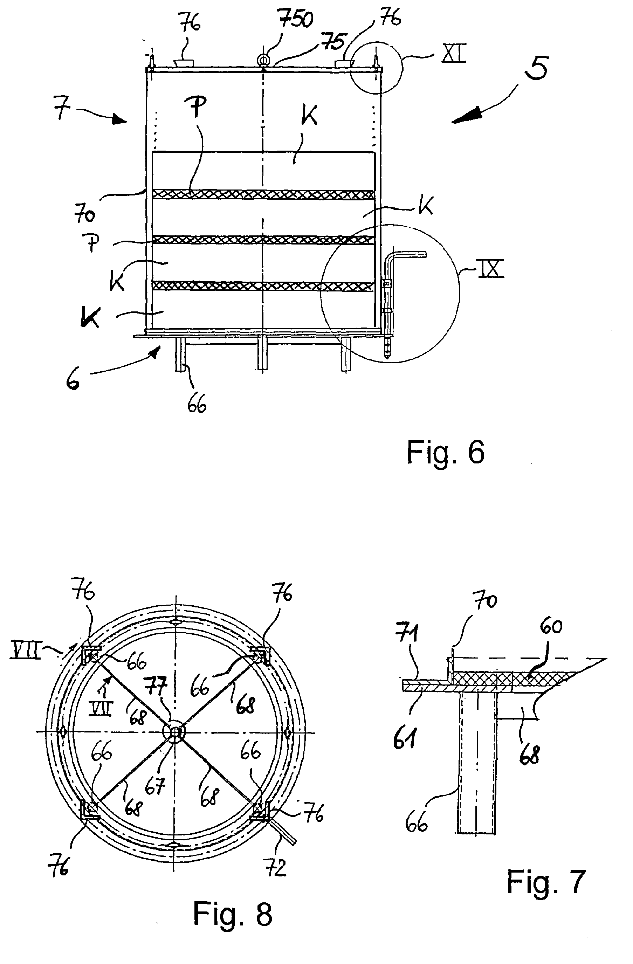

Ein weiteres Ausführungsbeispiel des erfindungsgemässen Behälters soll im folgenden anhand von Fig. 6, Fig. 7, Fig. 8, Fig. 9, Fig. 10 und Fig. 11 erläutert werden. Das in Fig. 6 - Fig. 11 dargestellte Ausführungsbeispiel des erfindungsgemässen Behälters 5 umfasst im wesentlichen zwei Behälterteile, nämlich ein Bodenteil 6 und ein zylindrisches glockenartiges Oberteil 7.

Das zylindrische glockenartige Oberteil 7 umfasst insbesondere die Behälterwand 70 (Fig. 6), die an ihrem unteren Ende mit einem hier im Querschnitt winkelförmig ausgebildeten, nach aussen abstehenden Auflagerand 71 versehen ist (siehe auch Ausschnitt in Fig. 7). Ebenso weist das Bodenteil 6 einen Auflagerand 61 auf, auf welchen der Auflagerand 71 des Oberteils 7 zur Auflage kommt (siehe Fig. 7). Das Bodenteil 6 weist im gezeigten Ausführungsbeispiel eine Auflageplatte 60 auf, die mit dem Bodenteil verschraubt ist (in Fig. 7 ist die Verschraubung nicht dargestellt) und die hier aus Holz ist, aber natürlich auch aus einem anderen geeigneten Material hergestellt sein kann. Auf diese Auflageplatte 60 können die Käselaibe K gestapelt werden, wie dies in Fig. 6 zu erkennen ist. Zwischen den einzelnen Käselaiben können ebene (Zwischen-)Platten P, die ebenfalls aus Holz hergestellt sein können, eingelegt werden, und die dazu dienen, dass die Oberfläche der Käselaibe K bei der Reifung eben bleibt.

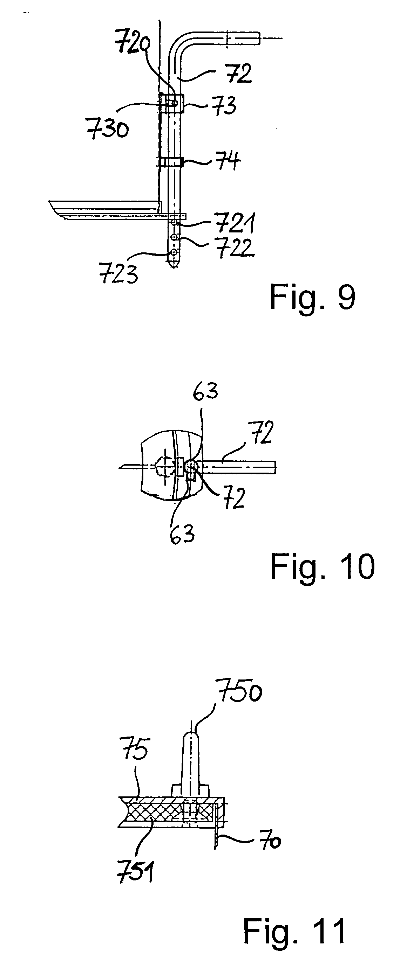

Die Käselaibe K haben einen Durchmesser, der etwas geringer ist als der Durchmesser der Auflageplatte 60, sodass nach dem Stapeln der Käselaibe K übereinander auf der Auflageplatte 60 das zylindrische Oberteil 7 (mit Hilfe eines Krans) glockenartig über die gestapelten Käselaibe K absenken lässt, bis der Auflagerand 71 des Oberteils 7 auf dem Auflagerand 61 des Bodenteils 6 zur Auflage kommt. Zu diesem Zweck können auf der Deckelfläche 75 des Oberteils 7 Ösen 750 vorgesehen sein, die insbesondere im Bereich des Randes der Deckelfläche angeordnet sind. Mit Hilfe dieser Ösen 750 kann das Oberteil 7 des Behälters 5 auf das Bodenteil 6 aufgesetzt bzw. auch wieder vom Bodenteil 6 abgehoben werden können (siehe Fig. 11). Der Deckel des Oberteils 7 kann insbesondere durch einen Deckelrand gebildet sein, unter welchem eine Deckelplatte 751, z.B. eine Holzplatte, angeordnet ist (ähnlich wie bei dem Bodenteil). Die Ösen 750 können dabei als Ringschrauben ausgebildet sein, die von unten her mit einer Senkmutter versehen werden und die Deckelplatte 751 mit dem Deckelrand verbinden und auf diese Weise den Deckel des Oberteils 7 bilden.

Damit in diesem Zustand der Behälter schnell und zuverlässig verschlossen werden kann, sind am Bodenteil 6 und am Oberteil 7 Arretierungsmittel vorgesehen, welche zusammen einen Schnellverschluss bilden. Am Oberteil 7 ist dazu ein schwenkbarer Verriegelungshebel 72 vorgesehen, der durch zwei Ösen 73 und 74 am Oberteil 7 hindurch geführt ist (**Fig. 9**). Der Verriegelungshebel 72 weist einen vorstehenden Stift 720 auf, welcher in einem entsprechenden Schlitz 730 in der Öse 73 geführt ist. An seinem unteren Ende ist der Verriegelungshebel 72 mit weiteren Stiften 721,722,723 versehen, welche beim Aufsetzen des Oberteils 7 auf das Bodenteil 6 durch eine Öse 63 im Bodenteil 6 hindurch geführt werden können. Die Öse 63 im Bodenteil .6 ist so ausgebildet, dass dies allerdings nur dann möglich ist, wenn sich der Verriegelungshebel 72 in der geöffneten Stellung befindet (siehe **Fig. 10**). Wenn die Stifte 721,722,723 des Verriegelungshebels 72 durch die Öse 63 des Bodenteils 6 hindurchgeführt sind, muss zum Verriegeln der Verriegelungshebel 72 um 90° um seine Längsachse verschwenkt werden, sodass die Stifte 721,722,723 nicht mehr durch die Öse 63 des Bodenteils 6 hindurch gelangen können. Das Oberteil 7 ist dann fest mit dem Bodenteil 6 verbunden und der Behälter 5 ist geschlossen. Entlang des Umfangs des Behälters 5 können natürlich mehrere solche Verriegelungshebel 72 und Ösen vorgesehen sein, beispielsweise vier auf dem Umfang, die jeweils um 90° in Umfangsrichtung versetzt sind.

In **Fig. 8** erkennt man nun, dass auf dem Deckel des Oberteils 7 vier Aufnahmeelemente 76 vorgesehen sind, hier als winkelförmige Elemente ausgebildet sind. Sie sind auf dem metallischen Deckelrand angebracht, und zwar derart, dass die strichliert in Fig. 8 angedeuteten Zentrierfüsse 66 (siehe auch Fig. 7) des Bodenteils 6 beim Stapeln der Behälter 5 übereinander mit den Aufnahmeelementen 76 quasi in Eingriff gelangen, sodass der obere Behälter relativ zu dem unteren Behälter zentriert ist. Die Zentrierfüsse 66 können durch ein Stück Rohr gebildet sein (zylindrisches Hohlprofil). Wie man ebenfalls in Fig. 8 erkennen kann, ist im Zentrum ein weiterer Stützfuss 67 angeordnet, der ebenfalls als Rohrstück ausgebildet sein kann, weshalb die Deckelplatte des unteren Behälters, die ja beispielsweise als Holzplatte ausgebildet sein kann (siehe weiter oben), in ihrem Zentrum eine metallische Platte bzw. Auflagefläche 77 aufweisen kann, damit sich der rohrstückartige Stützfuss 67 nicht in die Holzplatte "eingräbt". Zur Versteifung des Bodenteils 6 bzw. des Behälters 5 sind zwischen den Füssen flachprofilartige Streben 68 vorgesehen, die ein Kreuz bilden (siehe Fig. 8).

Wie man beispielsweise aus Fig. 6 erkennen kann, lässt sich auch dieses Ausführungsbeispiel des Behälters haben die Zentrierfüsse 66 auch noch die Funktion, eine Einrichtung zur Aufnahme eines Transporteurs zu bilden, beispielsweise zur Aufnahme der Gabel eines Gabelstaplers (oder eines geeigneten anderen Transporteurs). Die Gabel des Gabelstaplers greift zwischen die Zentrierfüsse, wobei - sofern erforderlich - die Zinken der Gabel seitlich auseinander gefahren werden können, bis sie an den Zentrierfüssen anstossen. Durch Anheben der Gabel kommen die Streben 68 zur Auflage auf der Gabel und der auf der Gabel aufliegende Behälter kann dann mit dem Gabelstapler manövriert werden, beispielweise aus dem Lager entnommen und zum Transport auf einen LKW verladen werden. Zum Manövrieren eines Behälters kann selbstverständlich auch ein Hubwagen zum Einsatz kommen.

Die Verwendung solcher Behälter erleichtert also das gesamte Handling in der Käserei ganz erheblich. Zudem lassen sich die Behälter auch sehr gut reinigen, was bei fest installierten Regalen, wie sie in Käsereien noch häufig anzutreffen sind, erheblich aufwändiger ist. Fest installierte Regale werden bei der Verwendung der beschriebenen Behälter nicht mehr benötigt.

Das Herausheben der Käselaibe aus den Behältern am Bestimmungsort erfolgt beschädigungsfrei mit Hilfe einer Vakuumglocke, wie das bis anhin auch schon der Fall ist.

## Patentansprüche

**1.** Stapelbarer Behälter (1;5) zur Lagerung von Käselaiben (K) zum Zwecke der Aufbewahrung zwecks Reifung und/oder zum Transport von Käselaiben, mit einer zylindrischen Behälterwand (2;70), mit einem Behälterboden (3;60,61)), mit einer Einrichtung (4;66) zur Aufnahme eines Transporteurs, beispielsweise zur Aufnahme der Gabel eines Gabelstaplers, sowie mit einer Einrichtung (42;66,76) zur Zentrierung des Behälters beim Stapeln auf einem anderen solchen Behälter (1).

**2.** Behälter nach Anspruch 1, bei welchem der Behälter (1;5) aus einem lebensmittelverträglichen Material hergestellt ist, z.B. aus verzinktem Stahl oder aus Edelstahl.

**3.** Behälter nach einem der vorangehenden Ansprüche, bei welchem der Behälter (5) ein Bodenteil (6) umfasst mit einem Auflagerand (61), sowie ein zylindrisch ausgebildetes glockenartiges Oberteil (7), welches die Behälterwand (70) umfasst, wobei das Oberteil (7) an seinem oberen Ende geschlossen und an seinem unteren Ende offen ist und an seinem unteren Ende einen nach aussen hin abstehenden Auflagerand (71) aufweist, sodass beim Aufsetzen des glockenartigen Oberteils (7) auf das Bodenteil (6) der Auflagerand (71) des glockenartigen Oberteils (7) auf dem Auflagerand (61) des Bodenteils (6) zur Auflage kommt.

**4.** Behälter nach Anspruch 3, bei welchem die Einrichtung zur Zentrierung so ausgebildet ist, dass das Oberteil (7) des Behälters auf seiner Deckelfläche (75) mehrere nach oben von Deckelfläche (75) abstehende Aufnahmeelemente (76) aufweist und das Bodenteil (6) des Behälters (5) mit entsprechenden Zentrierfüssen (66) versehen ist, die von der Unterseite des Bodenteils (6) nach unten weg abstehen, und wobei die Aufnahmeelemente (76) und die Zentrierfüsse (66) jeweils so angeordnet sind, dass beim Stapeln eines solchen Behälters auf einem anderen solchen Behälter die Zentrierfüsse (66) des oberen Behälters in die Aufnahmeelemente (76) des unteren Behälters eingreifen.

**5.** Behälter nach einem der Ansprüche 3 oder 4, bei welchem am Oberteil (7) und am Bodenteil (6) des Behälters (5) jeweils Arretierungsmittel vorgesehen sind, die zusammen einen Schnellverschluss bilden, um das Oberteil und das Bodenteil nach dem Aufsetzen des Oberteils fest verbinden zu können.

**6.** Behälter nach einem der Ansprüche 3 bis 5, bei welchem am Oberteil (7) des Behälters (6) auf seiner Deckelfläche (75) Ösen (750) vorgesehen sind, mit deren Hilfe das Oberteil (7) des Behälters (5) vom Bodenteil (6) abgehoben bzw. auf das Bodenteil (6) aufgesetzt werden kann.

**7.** Behälter nach einem der Ansprüche, bei welchem der Behälterboden (3) gelocht ist und/oder die Behälterwand (2) mit regelmässig geometrisch angeordneten Löchern (21) versehen ist zum Durchstecken von Stäben.

**8.** Verfahren zur Lagerung von Käselaiben (K) zwecks Reifung und/oder zum Transport von Käselaiben, bei welchem Verfahren mehrere Käselaibe (K) übereinander angeordnet gelagert und/oder transportiert werden, **dadurch gekennzeichnet, dass** die Käselaibe (K) in stapelbaren Behältern (1;5) gemäss einem der vorangehenden Ansprüche gelagert und/oder transportiert werden.

**9.** Verfahren nach Anspruch 8, bei welchem zwischen den einzelnen Käselaiben (K) ebene Platten (P) angeordnet sind, die eben auf der Oberfläche des jeweiligen Käselaibs (K) aufliegen.10. Verfahren nach einem der Ansprüche 8 oder 9, bei welchem die einzelnen Käselaibe (K) folienverpackt gelagert und/oder transportiert werden.

**11.** Verwendung eines Behälters (1) nach einem der Ansprüche 1 bis 7 bei der Lagerung von Käselaiben (K) zwecks Reifung und/oder zum Transport von Käselaiben (K).
